# EUROPÄISCHE PATENTSCHRIFT

(11) **EP 3 698 054 B1**
(45) Veröffentlichungstag und Bekanntmachung des Hinweises auf die Patenterteilung: **06.12.2023**
(21) Anmeldenummer: 18785542.4
(22) Anmeldetag: 02.10.2018
(51) Int. Cl.: F15B 21/048, B60T 17/00, B01D 53/26

(54) **LUFTAUFBEREITUNGSEINRICHTUNG FÜR KRAFTFAHRZEUGE**
AIR PREPARATION DEVICE FOR MOTOR VEHICLES
DISPOSITIF DE TRAITEMENT D'AIR POUR VÉHICULES À MOTEUR

(30) Priorität: 19.10.2017 DE 102017124383
(43) Veröffentlichungstag der Anmeldung: 26.08.2020
(73) Patentinhaber: KNORR-BREMSE Systeme für Nutzfahrzeuge GmbH, 80809 München (DE)
(72) Erfinder: SCHNITTGER, Karsten, 80935 München (DE)
(86) Internationale Anmeldenummer: PCT/EP2018/076711
(87) Internationale Veröffentlichungsnummer: WO 2019/076621

(56) Entgegenhaltungen:
- EP-A1- 2 407 231
- EP-A2- 2 829 744
- WO-A1-2017/050408
- DE-A1-102014 111 523

## Beschreibung

Die vorliegende Erfindung betrifft eine Luftaufbereitungseinrichtung für Kraftfahrzeuge, mit wenigstens einem erster Druckluftanschluss und einem zweiten Druckluftanschluss, einer ersten Luftaufbereitungskomponente und einer zweiten Luftaufbereitungskomponente.

Für Parkbremsen (auch Feststellbremsen genannt) von Nutzfahrzeugen oder anderweitige Pneumatikkreisläufe von Kraftfahrzeugen, insbesondere von Zugfahrzeugen mit Anhänger, werden Lufttrockner eingesetzt, die die von einer Druckluftquelle kommende öl- und wasserhaltige Druckluft reinigen und trocknen, bevor diese den verschiedenen Pneumatikkreisläufen des Kraftfahrzeuges zur Verfügung gestellt wird.

Ist das Trockenmittel des Lufttrockner bzw. der Lufttrocknerpatrone gesättigt, wird entgegen der üblichen Strömungsrichtung ein Teil der zuvor aufbereiteten Druckluft durch den Lufttrockner bzw. die Lufttrocknerpatrone hindurch und nach außen abgeleitet. Auf diese Weise ist eine Regeneration des Lufttrockners bzw. der Lufttrocknerpatrone möglich.

Aus der WO 2017/050408 A1 ist eine Trocknungseinrichtung einer Druckluftversorgungsanlage bekannt. Ferner beschreibt die EP 2 829 744 A2 eine Luftbeschaffungsvorrichtung für ein Druckluftsystem eines Fahrzeugs.

Jedoch liegt bei bestimmten Sonderanwendungen, insbesondere im Bereich der Lastkraftwagen, ein derart hoher Luftfverbrauch vor, sodass keine Zeit zur Regeneration des Lufttrockners bzw. der Lufttrocknerpatrone bleibt. In diesem Falle werden spezielle Doppellufttrockner eingesetzt, auf deren Gehäuse zwei Lufttrockner bzw. Lufttrocknerpatronen montiert sind. Anhand einer Verschaltung der beiden Lufttrockner bzw. Lufttrocknerpatronen reinigt ein Lufttrockner stets die einströmende Druckluft während der andere Lufttrockner regeniert wird.

Derartige Doppellufttrockner stellen jedoch aufwendige, speziell auf den Einsatzzweck zugeschnittene Konstruktionen dar, die lediglich für wenige Sonderanwendungen zum Einsatz kommen. Aufgrund des komplexen Aufbaus und der geringen Stückzahlen sind derartige Doppellufttrockner sehr teuer.

Es ist daher die Aufgabe der vorliegenden Erfindung, eine Luftaufbereitungseinrichtung der eingangs genannten Art in vorteilhafter Weise weiter zu bilden, insbesondere dahingehend, dass eine Luftaufbereitungseinrichtung einfach aufgebaut sein kann, günstig herstellbar und instand zu halten ist sowie auf kontrollierte Weise regeneriert werden kann.

Diese Aufgabe wird erfindungsgemäß gelöst durch eine Luftaufbereitungseinrichtung mit den Merkmalen des Anspruchs 1. Danach ist eine Luftaufbereitungseinrichtung für Kraftfahrzeuge mit wenigstens einem ersten Druckluftanschluss und einem zweiten Druckluftanschluss sowie einer ersten Luftaufbereitungskomponente und einer zweiten Luftaufbereitungskomponente vorgesehen.

Die erste Luftaufbereitungskomponente weist wenigstens ein erstes Magnetventil, ein zweites Magnetventil und ein drittes Magnetventil auf, eine erste Lufttrocknerpatrone, ein erstes Hauptrückschlagventil, ein erstes Regenerationsrückschlagventil, eine erste Regenerationsdrossel und ein erstes Einlassventil.

Die zweite Luftaufbereitungskomponente weist wenigstens eine zweite Lufttrocknerpatrone, ein zweites Hauptrückschlagventil, ein zweites Regenerationsrückschlagventil, eine zweite Regenerationsdrossel und ein zweites Einlassventil auf.

Das erste Magnetventil und das zweite Magnetventil sind zur Steuerung der ersten Luftaufbereitungskomponente vorgesehen.

Des Weiteren ist eine Steuerleitung derart vorgesehen, dass die zweite Luftaufbereitungskomponente mit dem dritten Magnetventil der ersten Luftaufbereitungskomponente verbunden ist.

Die Erfindung basiert auf dem Grundgedanken, dass die zweite Luftaufbereitungseinheit eine separate Einheit ist, sodass die erste und die zweite Luftaufbereitungseinheit unabhängig voneinander steuerbar sind. So kann anhand der wenigstens zwei Luftaufbereitungseinheiten, insbesondere auch alternierend zueinander, jeweils aufbereitete Druckluft bereitgestellt und/oder die jeweils zugehörige Lufttrocknerpatrone regeneriert werden. Insbesondere wird es dadurch möglich, z.B. zwei herkömmliche bzw. Serienmäßige Luftaufbereitungskomponenten (wie Trocknerkartuschen, Trocknerpatronen) zu verwenden und so zu verschalten, dass damit auch jeweils und jederzeit eine Luftaufbereitungskomponente zur Lufttrocknung genutzt werden kann, während die andere Luftaufbereitungskomponente regenerieren kann.

Insbesondere kann die erfindungsgemäße Luftaufbereitungseinrichtung für eine Parkbremseinrichtung eines Kraftfahrzeuges einsetzbar sein.

In diesem Sinne ist unter einem Kraftfahrzeug, insbesondere einem Nutzfahrzeug, vorzugsweise ein Zugfahrzeug mit wenigstens einem Anhänger zu verstehen.

Mit der erfindungsgemäßen Luftaufbereitungseinrichtung ist es möglich, zumindest im Wesentlichen serienmäßige Luftaufbereitungskomponenten mit jeweils einem Trockenmittel bzw. einer Trockenmittelpatrone zu verwenden.

Hinsichtlich der ersten Luftaufbereitungskomponente ist es gegenüber bereits standardmäßig eingesetzten Komponenten lediglich notwendig, das dritte Magnetventil hinzuzufügen.

Auf diese Weise ist eine unabhängige, eigenständige Steuerung der zweiten Luftaufbereitungskomponente mittels des dritten Magnetventils, sowie der ersten Luftaufbereitungskomponente mittels des ersten und zweiten Magnetventils bereitstellbar.

Anhand serienmäßiger bzw. standardmäßiger Luftaufbereitungskomponenten ist eine einfache und günstige Bereitstellung sowie vorteilhafte Instandhaltung der erfindungsgemäßen Luftaufbereitungseinrichtung verfügbar.

Insbesondere kann die erfindungsgemäße Luftaufbereitungseinrichtung derart vorgesehen sein, dass die erste Luftaufbereitungskomponente in bekannter Weise einsetzbar bzw. einbaubar ist. Im Vergleich mit bestehenden System ist vornehmlich die zweite Luftaufbereitungskomponente der Luftaufbereitungseinrichtung erfindungsgemäß hinzuzufügen.

Die erste und zweite Luftaufbereitungskomponente, insbesondere ein Lufttrockner bzw. eine Lufttrocknerpatrone oder -kartusche, sind im Wesentlichen vergleichbar mit üblicherweise in Einzellufttrocknern für Standardanwendungen eines Kraftfahrzeuges eingesetzten Komponenten.

Des Weiteren sind das erste, zweite und dritte Magnetventil vorzugsweise als federbelastete 3/2-Wegenventile vorgesehen, insbesondere normal geschlossene 3/2-Wegeventile. Normal geschlossen kann insbesondere bedeuten, dass keine Verbindung zwischen Eingang und Ausgang des Ventils vorliegt oder zumindest keine Verbindung zu einer Pneumatikleitung mit hohem Fluiddruck bzw. Luftdruck bereitgestellt ist.

Die Luftaufbereitungseinrichtung, insbesondere die erste Luftaufbereitungskomponente, kann eine Steuereinheit zur Steuerung des ersten, zweiten und dritten Magnetventils aufweisen.

Ferner ist anhand der Steuerleitung eine Verbindung zwischen der ersten und zweiten Luftaufbereitungskomponente gegeben, sodass eine vorteilhafte Verwendung ermöglicht wird.

Die Luftaufbereitungskomponenten sind derart miteinander verschaltet, sodass jeweils eine Lufttrocknerkomponente bzw. jeweils eine Lufttrocknerpatrone zur Luftaufbereitung genutzt werden kann, während die andere Lufttrocknerkomponente bzw. Lufttrocknerpatrone beispielsweise regenierert werden kann.

Im Sinne der vorliegenden Erfindung können die wenigstens erste und zweite Lufttrocknerkomponente bzw. die erste und zweite Lufttrocknerpatrone unabhängig voneinander oder gleichzeitig zur Luftaufbereitung eingesetzt oder regeneriert werden.

Es kann weiter vorgesehen sein, dass ein Ausgang des dritten Magnetventils anhand der Steuerleitung mit einem Eingang des zweiten Regenerationsrückschlagventils und einem Steuereingang des zweiten Einlassventils derart verbunden bzw. verbindbar ist, dass die zweite Luftaufbereitungskomponente mittels des dritten Magnetventils steuerbar ist.

Allgemein ist zu berücksichtigen, dass Rückschlagventile im Sinne der vorliegenden Erfindung stets dem anliegenden Druckgefälle zwischen jeweiligem Eingang und Ausgang entsprechend einen Flussweg freigeben oder sperren.

Anhand des dritten Magnetventils ist ein hoher oder ein niedriger Fluiddruck bzw. Luftdruck in der Steuerleitung bereitstellbar. Indem die Steuerleitung mit dem Steuereingang des zweiten Einlassventils verbunden ist, kann ein Umschalten des Einlassventils erfolgen.

Das zweite Einlassventil kann, ebenso wie das erste Einlassventil, sowohl zur Zuführung von frischer Druckluft aus dem Druckluftanschluss zu der zweiten bzw. ersten Lufttrocknerpatrone vorgesehen sein, als auch zum Ablassen von mit Feuchtigkeit gesättigter Druckluft aus der zweiten bzw. ersten Lufttrocknerpatrone im Zuge der Regeneration.

In Verbindung mit der zweiten Lufttrocknerpatrone ist eine Luftaufbereitung oder eine Regeneration an der zweiten Luftaufbereitungskomponente über das dritte Magnetventil der ersten Luftaufbereitungskomponente einstellbar bzw. steuerbar.

Darüber hinaus kann vorgesehen sein, dass ein Eingang des ersten Hauptrückschlagventils mit einem Ausgang der ersten Lufttrocknerpatrone und ein Eingang des zweiten Hautprückschlagventils mit einem Ausgang der zweiten Lufttrocknerpatrone verbunden ist, wobei ein Ausgang des ersten Hauptrückschlagventils und ein Ausgang des zweiten Hauptrückschlagventils jeweils mit einem ersten Pneumatikkreislaufausgang verbunden ist.

Die Bereitstellung von aufbereiteter Druckluft kann anhand der ersten bzw. zweiten Luftaufbereitungskomponente über den jeweils zugeordneten Druckluftanschluss, das jeweilige Einlassventil, die jeweilige Lufttrocknerpatrone und das jeweilige Hauptrückschlagventil an dem ersten Pneumatikkreislaufausgang erfolgen.

Es ist insbesondere eine Verbindung zwischen der ersten bzw. zweiten Lufttrocknerpatrone mit einem ersten Pneumatikkreislaufausgang zur Bereitstellung von aufbereiteter Druckluft für einen nachfolgenden Pneumatikkreislauf, wie z.B. ein Bremssystem, verfügbar.

Vorzugsweise wird aufbereitete Druckluft der ersten und zweiten Luftaufbereitungskomponente an dem selben Pneumatikkreislaufausgang bereitgestellt, um beispielsweise eine fortlaufende Versorgung mit aufbereiteter Druckluft während der Regeneration einer der wenigstens zwei Lufttrocknerpatronen zu ermöglichen.

Des Weiteren ist das zweite Magnetventil derart angeordnet, dass ein Eingang des zweiten Magnetventils mit einem zweiten Pneumatikkreislaufausgang und der Ausgang des zweiten Magnetventils mit dem ersten Regenerationsrückschlagventil sowie einem Steuereingang des ersten Einlassventils verbunden ist.

In Abhängigkeit von der Ausgestaltung nachgeschalteter Pneumatikkreisläufe kann der erste und zweite Pneumatikkreislaufausgang selbstverständlich auch als ein einzelner Pneumatikkreislaufausgang vorgesehen werden.

Vorzugsweise ist an dem wenigstens einen ersten Pneumatikkreislaufausgang stets aufbereitete Druckluft vorhanden, sodass ein hoher Fluiddruck bzw. Luftdruck vorliegt.

Indem das zweite Magnetventil an seinem Ausgang mit dem ersten Regenerationsrückschlagventil sowie dem Steuereingang des ersten Einlassventils verbunden ist, ist eine Regeneration der ersten Lufttrocknerpatronen über das zweite Magnetventil steuerbar.

Insbesondere kann aufbereitete Druckluft von dem zweiten Pneumatikkreislaufausgang durch das zweite Magnetventil über das erste Regenerationsrückschlagventil bis zu der ersten Lufttrocknerpatrone zugeführt werden.

Anhand der Verbindung mit dem Steuereingang des ersten Einlassventils kann ein hoher Luftdruck der aufbereiteten Druckluft ein Schalten des ersten Einlassventils bewirken. So kann vorzugsweise eine Verbindung zwischen dem ersten Druckluftanschluss und der ersten Lufttrocknerpatrone getrennt werden.

Das erste Einlassventil kann dabei derart vorgesehen sein, dass durch das Umschalten über den Steuereingang mittels dem zweiten Magnetventil die erste Lufttrocknerpatrone mit einem Entlüftungsausgang des ersten Einlassventils verbunden wird.

Die aufbereite Druckluft wird mittels dem zweiten Magnetventil über das erste Regenerationsrückschlagventil der ersten Lufttrocknerpatrone zugeführt und kann über den Entlüftungsausgang des ersten Einlassventils abgelassen werden.

Auf selbige Weise kann auch die Verschaltung der zweiten Luftaufbereitungskomponente, insbesondere der zweiten Lufttrocknerpatrone mit dem zweiten Regenerationsrückschlagventil und dem zweiten Einlassventil, vorgesehen sein, um eine Steuerung mittels dem dritten Magnetventil zu ermöglichen.

Es kann des Weiteren vorgesehen sein, dass das erste und/oder zweite Einlassventil als ein 3/2-Wegeventil ausgestaltet ist, wobei ein Entlüftungsausgang des ersten und/oder zweiten Einlassventils mit einem ersten bzw. zweiten Regenerationsausgang verbunden ist.

Indem die Steuereingänge des ersten und/oder zweiten Einlassventils mit dem zweiten bzw. dritten Magnetventil verbunden sind, kann vorteilhafter Weise ein Umschalten zwischen Luftaufbereitung und Regeneration mittels dem zweiten bzw. dritten Magnetventil jeweils unabhängig voneinander gesteuert werden.

Anhand der Ausgestaltung als ein insbesondere federbelastetes 3/2-Wegeventil, ist mit dem ersten bzw. zweiten Einlassventil jeweils die Zuführung von frischer Druckluft des ersten bzw. zweiten Druckluftanschlusses bedarfsweise möglich. Ebenso kann die Regeneration der ersten bzw. zweiten Lufttrocknerpatrone durch Umschalten des ersten bzw. zweiten Einlassventils erfolgen.

Alternativ können das erste und/oder zweite Einlassventil in Form von jeweils zwei 2/2-Wegeventilen mit einem eigenständigen Einlassventil und einem eigenständigen Entlüftungsventil ausgestaltet sein.

Dabei kann jeweils der Steuereingang des Einlassventils sowie ein Steuereingang eines Entlüftungsventils derart mit dem zweiten Magnetventil bzw. dem dritten Magnetventil in Verbindung stehen. So ist ein gleichzeitiges Schalten der jeweiligen 2/2-Wegeventile für die erste und/oder zweite Luftaufbereitungskomponente, z.B. zum Wechsel in den Regenerationsmodus, möglich ist.

Darüber hinaus kann ein Schnellentlüftungsventil derart vorgesehen sein, das ein Eingang des ersten Magnetventils mit dem zweiten Pneumatikkreislaufausgang und ein Ausgang des ersten Magnetventils mit dem Schnellentlüftungsventil verbunden ist.

Das Schnellentlüftungsventil ist kein Magnetventil, sondern wird durch den Zuleitungsdruck in Richtung Verbraucher geöffnet und gibt beim Umschalten durch den Verbraucherdruck seinen Abluftanschluss frei.

Das Schnellentlüftungsventil ist beispielsweise ein sogenanntes ESS-Ventil.

In einem Ansteuerzustand wird ein Abluftanschluss des Schnellentlüftungsventils verschlossen. In einem gezielt herbeiführbaren Entlüftungszustand wird der Abluftanschluss freigegeben.

Auf diese Weise is eine bedarfsweise Schnellentlüftung des zweiten Pneumatikkreislaufausgangs bedarfsweise und unabhängig von der ersten bzw. zweiten Lufttrocknerpatrone verfügbar.

Wie vorstehend bereits dargelegt, kann der zweite Pneumatikkreislaufausgang mit dem ersten Pneumatikkreislaufausgang verbunden bzw. identisch sein.

Die Ausgestaltung der erfindungsgemäßen ersten Luftaufbereitungskomponente mit dem ersten, zweiten und dritten Magnetventil macht eine vollständig unabhängige Handhabung der ersten Lufttrocknerpatrone und der zweiten Lufttrocknerpatrone möglich.

Insbesondere ergeben sich die nachfolgende Kombinationen von verschiedenen Betriebsmodi für die erste und zweite Luftaufbereitungskomponente im Kontext der erfindungsgemäße Luftaufbereitungseinrichtung.

Die erste und zweite Luftaufbereitungskomponente können beide aktiv sein, wobei durch beide Luftaufbereitungskomponenten aufbereitete Druckluft an dem ersten Pneumatikkreislaufausgang zur Verfügung gestellt wird.

Die erste und zweite Luftaufbereitungskomponente können beide inaktiv sein, wobei weder Druckluft aufbereitet wird, noch eine Regeneration der ersten oder zweiten Lufttrocknerpatrone erfolgt.

Die erste und zweite Luftaufbereitungskomponente können beide regeneriert werden, wobei aufbereitete Druckluft durch die erste und zweite Lufttrocknerpatrone hindurch geleitet und aus dem System ausgeleitet wird.

Die erste oder zweite Lufttrocknerpatrone kann regeniert werden, wobei die zweite bzw. erste Luftaufbereitungskomponente zur selben Zeit aufbereitete Druckluft bereitstellt.

Die erste Regenerationsdrossel kann in das zweite Magnetventil integriert sein.

Weiter denkbar ist, dass die zweite Regenerationsdrossel in das dritte Magnetventil integriert ist.

Weitere Einzelheiten und Vorteile der Erfindung sollen nun anhand von in den Zeichnungen näher dargestellten Ausführungsbeispielen erläutert werden.

Es zeigen:
- Fig. 1: ein Ausführungsbeispiel einer Luftaufbereitungseinrichtung mit erster und zweiter Luftaufbereitungskomponente;
- Fig. 2: ein zweites Ausführungsbeispiel einer Luftaufbereitungseinrichtung mit erster und zweiter Luftaufbereitungskomponente.

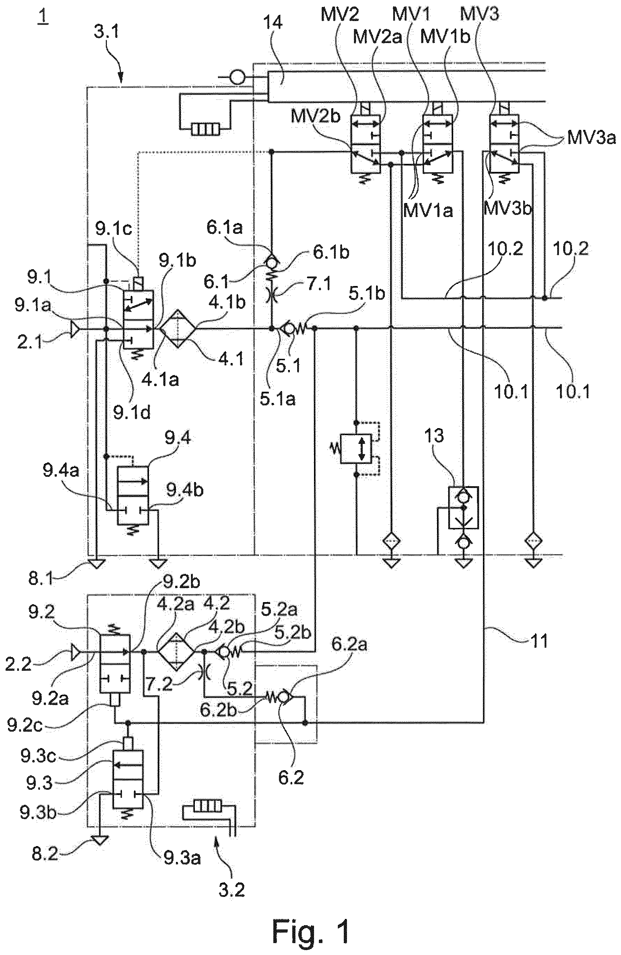

**Fig. 1** zeigt in schematischer Darstellung eine Luftaufbereitungseinrichtung 1 für Kraftfahrzeuge gemäß einem ersten Ausführungsbeispiel.

In Fig. 1 ist die Luftaufbereitungseinrichtung 1 mit wenigstens einem ersten Druckluftanschluss 2.1 und einem zweiten Druckluftanschluss 2.2 sowie einer ersten Luftaufbereitungskomponente 3.1 und einer zweiten Luftaufbereitungskomponente 3.2 gezeigt.

Die erste Luftaufbereitungskomponente 3.1 ist mit einem ersten Einlassventil 9.1, einer ersten Lufttrocknerpatrone 4.1, einem ersten Hauptrückschlagventil 5.1, einem ersten Regenerationsrückschlagventil 6.1 und einer ersten Regenerationsdrossel 7.1 dargestellt. Des Weiteren weist die erste Luftaufbereitungskomponente 3.1 ein erstes, zweites und drittes Magnetventil MV1; MV2; MV3 auf.

Das erste Einlassventil 9.1 ist gemäß Fig. 1 als ein 3/2-Wegeventil ausgebildet.

Ein Eingang 9.1a des ersten Einlassventils 9.1 ist mit dem ersten Druckluftanschluss 2.1 verbunden. Ein Ausgang 9.1b des ersten Einlassventils 9.1 ist mit einem Eingang 4.1a der ersten Lufttrocknerpatrone 4.1 verbunden.

Nach Fig. 1 ist das erste Einlassventil 9.1 derart geschaltet, dass eine Druckluftaufbereitung stattfindet.

So ist frische Druckluft zur Aufbereitung der ersten Lufttrocknerpatrone 4.1 zuführbar.

Ein Ausgang 4.1b der ersten Luftrocknerpatrone 4.1 ist ferner mit einem Eingang 5.1a des ersten Hauptrückschlagventils 5.1 verbunden. Ein Ausgang 5.1b des Hauptrückschlagventils 5.1 ist mit einem ersten Pneumatikkreislaufausgang 10.1 verbunden.

Es kann aufbereitete Druckluft von der ersten Lufttrocknerpatrone 4.1 aus über das Hauptrückschlagventil 5.1 zu dem ersten Pneumatikkreislaufausgang 10.1 überführt werden.

Das erste Hauptrückschlagventil 5.1 gibt hierbei dem Druckgefälle entsprechend den Flussweg zu dem ersten Pneumatikkreislaufausgang frei.

Für eine Regeneration des ersten Lufttrocknerpatrone 3.2 wird das erste Einlassventil 9.1 in eine getrennte Schaltstellung gebracht, sodass keine Verbindung zwischen Eingang 9.1a und Ausgang 9.1b vorliegt.

Hierzu ist ein Steuereingang 9.1c des ersten Einlassventils 9.1 mit einem Ausgang MV2b des zweiten Magnetventils MV2 verbunden.

Ein Eingang MV2a des zweiten Magnetventils MV2 ist mit einem zweiten Pneumatikkreislaufausgang 10.2 der ersten Luftaufbereitungskomponente 3.1 verbunden.

Ferner ist eine Steuereinheit 14 zur Ansteuerung des ersten, zweiten und dritten Magnetventils MV1; MV2; MV3 vorgesehen.

So ist aufbereite Druckluft von dem zweiten Pneumatikkreislaufausgang 10.2 über den Eingang MV2a und den Ausgang MV2b des zweiten Magnetventils MV2 bedarfsweise rückführbar. Es wird das erste Einlassventil 9.1 anhand des am Steuereingang 9.1c anliegenden Drucks für die Regeneration der ersten Lufttrocknerpatrone 4.1 umgeschaltet.

Des Weiteren ist zwischen dem Ausgang MV2b des zweiten Magnetventils MV2 und dem Ausgang 4.1b der ersten Lufttrocknerpatrone 4.1 das erste Regenerationsrückschlagventil 6.1 und die erste Regenerationsdrossel 7.1 vorgesehen.

Der Eingang 6.1a der ersten Regenerationsdrossel 6.1 ist mit dem Ausgang MV2b des zweiten Magnetventils MV2 verbunden, wobei der Ausgang 6.1b mit einem Ausgang 4.1b der ersten Lufttrocknerpatrone 4.1 verbunden ist.

Zum Zwecke der Regeneration kann aufbereitete Druckluft von dem zweiten Pneumatikkreislaufausgang 10.2 mittels dem zweiten Magnetventil MV2 bedarfsweise über das erste Regenerationsrückschlagventil 6.1 und die erste Regenerationsdrossel 7.1 der ersten Lufttrocknerpatrone 4.1 zugeführt werden.

Von der ersten Lufttrocknerpatrone 4.1 aus wird die gesättigte Druckluft über den Ausgang 9.1b und einen Entlüftungsausgang 9.1d des ersten Einlassventils 9.1 zu einem ersten Regenerationsausgang 8.1 der ersten Luftaufbereitungskomponente 3.1 geführt und aus dem System abgelassen.

Für den Fall der Regeneration mit dem getrennt geschalteten ersten Einlassventil 9.1, ist nach Fig. 1 ein Ableitungsventil 9.4 vorgesehen.

Das Ableitungsventil 9.4, insbesondere ein Eingang 9.4a, ist mit dem ersten Druckluftanschluss 2.1 und dem Eingang 9.1a des ersten Einlassventils 9.1 verbunden.

So kann während einer Situation, bei der der Systemdruck über dem zulässigen Wert liegt, überschüssige Druckluft von dem ersten Druckluftanschluss 3.1 über das Ableitungsventil 9.4, insbesondere einen Ausgang 9.4b, abgelassen werden.

Ist an den ersten Druckluftanschluss ein Kompressor oder eine andere Druckluftquelle angeschlossen, kann die Druckluftquelle auch während der Regeneration der ersten Lufttrocknerapatrone und bei getrennt geschaltetem ersten Einlassventil 9.1 weiterhin Druckluft fördern. Ein Kompressor oder dergleichen kann somit kontinuierlich betrieben werden.

Ein Eingang MV1a des ersten Magnetventil MV1 ist mit dem zweiten Pneumatikkreislaufausgang 10.2 verbunden. Ein Ausgang MV1b des ersten Magnetventils MV1 ist mit einem Schnellentlüftungsventil 13 verbunden.

So ist es möglich, aufbereitete Druckluft aus dem zweiten Pneumatikkreislaufausgang 10.2 bedarfsweise mittels dem ersten Magnetventil MV1 über das Schnellentlüftungsventil 13 abzulassen.

Insbesondere sind das erste, zweite und dritte Magnetventil MV1; MV2; MV3 unabhängig voneinander durch die Steuereinheit 14 schaltbar.

Eine Schnellentlüftung des zweiten Pneumatikkreislaufausgang 10.2 kann unabhängig von einer Regeneration oder eine Druckluftaufbereitung z.B. der ersten Luftaufbereitungskomponente 3:1 erfolgen.

Nach Fig. 1 ist die Luftaufbereitungseinrichtung 1 des Weiteren mit einer zweiten Luftaufbereitungskomponente 3.2 vorgesehen.

Die zweite Luftaufbereitungskomponente 3.2 ist mit einem zweiten Druckluftanschluss 2.2, einem zweiten Einlassventil 9.2, einem Entlüftungsventil 9.3, einer zweiten Lufttrocknerpatrone 4.2, einem zweiten Hauptrückschlagventil 5.2, einem zweiten Regenerationsrückschlagventil 6.2 und einer zweiten Regenerationsdrossel 7.2 dargestellt.

Nach Fig. 1 sind das zweite Einlassventil 9.2 und das Entlüftungsventil 9.3 derart geschaltet, dass eine Druckluftaufbereitung stattfindet.

Insbesondere ist ein Ausgang 9.2b mit einem Eingang 9.2a des zweiten Einlassventils 9.2 derart verbunden, dass Druckluft von dem zweiten Druckluftanschluss 2.2 über einen Eingang 4.2a in die zweite Lufttrocknerpatrone 4.2 eingeleitet werden kann.

Aufbereite Druckluft kann von einem Ausgang 4.2b der zweiten Lufttrocknerpatrone 4.2 an einen Eingang 5.2a des zweiten Hauptrückschlagventils 5.2 weitergeleitet werden.

Ein Ausgang 5.2b des zweiten Hauptrückschlagventils 5.2 ist mit dem ersten Pneumatikkreislaufausgang 10.1 verbunden, sodass aufbereitete Druckluft aus der zweiten Luftaufbereitungskomponente 3.2 und der ersten Luftaufbereitungskomponente 3.1 zusammengeführt und für nachgeschaltete Pneumatikkreisläufe zur Verfügung gestellt werden kann.

Die zweite Luftaufbereitungskomponente 3.2 ist über eine Steuerleitung 11 mit einem Ausgang MV3b des dritten Magnetventils MV3 verbunden.

Insbesondere sind gemäß Fig. 1 ein Eingang 6.2a des Regenerationsrückschlagventils 6.2, ein Steuereingang 9.2c des zweiten Einlassventils 9.2 sowie ein Eingang 9.3a und ein Steuereingang 9.3c des Entlüftungsventils 9.3 über die Steuerleitung 11 mit dem Ausgang MV3b des dritten Magnetventils MV3 verbunden.

Ein Eingang MV3b des dritten Magnetventils MV3 ist mit dem zweiten Pneumatikkreislaufausgang 10.2 verbunden, der vorzugsweise einen hohen Fluiddruck bzw. Luftdruck aufweist.

Sobald das dritte Magnetventil MV3 durchgehend geschaltet ist, also eine Verbindung zwischen Eingang MV3a und Ausgang MV3b vorliegt, bewirkt die an die Steuereingänge 9.2c; 9.3c des zweiten Einlassventils 9.2 und des Entlüftungsventils 9.3 übergeleitete Druckluft ein Schalten des zweiten Einlassventils 9.2 und des Entlüftungsventils 9.3 in den Regenerationsmodus.

Das zweite Einlassventil 9.2, ist alternativ zu dem ersten Einlassventil 9.1, als ein federbelastetes 2/2-Wegeventil ausgestaltet. Demnach weist die zweite Luftaufbereitungskomponente ein weiteres, separates Entlüftungsventil 9.3 in Form eines 2/2-Wegeventils auf.

Im Regenerationsmodus ist das Einlassventil 9.2 aufgrund der am Steuereingang 9.2c anliegenden Druckluft getrennt geschaltet, sodass keine Verbindung zwischen dem Eingang 9.2a und dem Ausgang 9.2b vorliegt. Es kann keine Druckluft von dem zweiten Druckluftanschluss 2.2 an die zweite Lufttrocknerpatrone 4.2 weitergeleitet werden.

Für die Regeneration der zweiten Lufttrocknerpatrone 4.2 kann die Druckluft von dem dritten Magnetventil MV3 über die Steuerleitung 11 zu einem Eingang 6.2a des zweiten Regenerationsrückschlagventils 6.2 strömen.

Im Sinne des vorliegenden Druckgefälles kann die Druckluft aus der Steuerleitung 13 von dem Eingang 6.2a zu dem Ausgang 6.2b des zweiten Regenerationsrückschlagventils 6.2 übergehen.

Von dem Ausgang 6.2b des zweiten Regenerationsrückschlagventils 6.2 gelangt die aufbereite Druckluft, die aus dem zweiten Pneumatikkreislaufausgang 10.2 stammt, über die zweite Regenerationsdrossel 7.2 bis zu dem Ausgang 4.2b der zweiten Lufttrocknerpatrone 4.2.

Von dem Eingang 4.2a der zweiten Lufttrocknerpatrone 4.2 aus, kann die gesättigte Druckluft zu dem Eingang 9.3a des Entlüftungsventil 9.3 strömen.

Das Entlüftungsventil 9.3 wird für den Regenerationsmodus der zweiten Lufttrocknerpatrone 4.2 mittels des Steuereingangs 9.3c auf Durchlass geschaltet, sodass der Eingang 9.3a und der Ausgang 9.3b miteinander verbunden sind.

Der Ausgang 9.3b des Entlüftungsventils 9.3 ist mit einem zweiten Regenerationsausgang 8.2 verbunden.

So kann mit Feuchtigkeit und Öl gesättigte Druckluft aus der Regeneration der zweiten Lufttrocknerpatrone 4.2 über den Ausgang 9.3b des Entlüftungsventil 9.3 und den zweiten Regeneraitonsausgang 8.2 aus dem System abgelassen werden.

Die erste Luftaufbereitungskomponente 3.1 wird auch «Master» genannt, da sie die zweite Luftaufbereitungskomponente 3.2 steuern kann (insbesondere über das dritte Magnetventil MV3). Die Luftaufbereitungskomponente 3.2 wird deshalb auch «Slave» genannt.

Ein Vorteil dieser Anordnung ist beispielsweise, dass die beiden Luftaufbereitungskomponenten «Master» und «Slave» auf Standardkomponenten basieren können und sich so aus dem gleich Modulbaukasten für Luftaufbereitungskomponenten bedienen können. Aufwendige Sonderanpassung sind so nicht erforderlich. Dadurch werden auch Kostenvorteile gegenüber bekannten Doppellufttrockner erreicht, da diese Doppellufttrockner eine Sonderanfertigung bzw. Sonderkonstruktion sind. Zudem kann die Luftaufbereitungskomponente «Master» an der gleichen Stelle mit der Serienverrohrung in das Nutzfahrzeug eingebaut werden wie bei sonst auch üblich bei Nutzfahrzeugen aus der Serie. Es ist lediglich die zusätzliche Komponente «Slave» hinzuzufügen, die ebenfalls auf Standardkomponenten basiert und lediglich eine entsprechende Anbindung und Verrohrung benötigt.

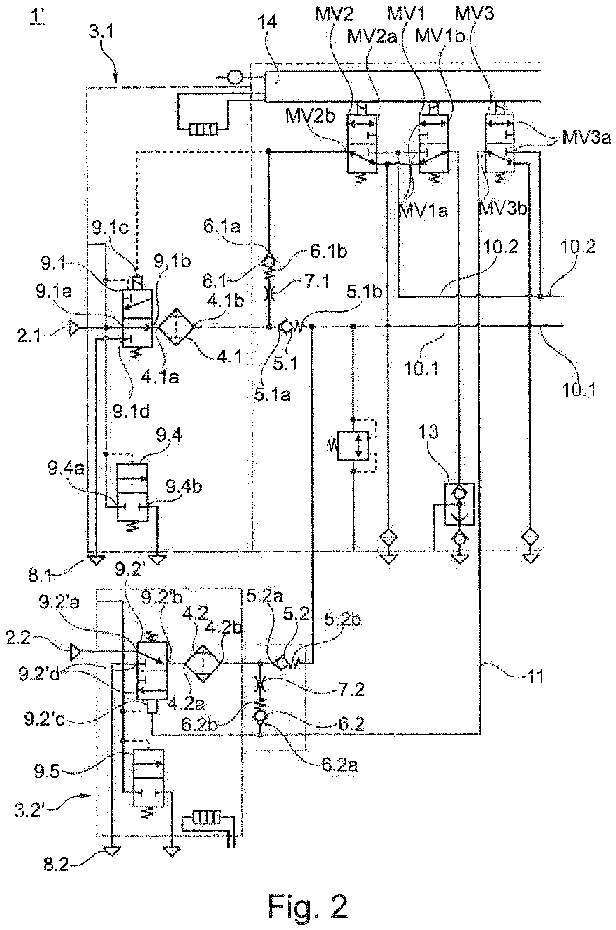

In **Fig. 2** ist ein zweites Ausführungsbeispiel einer Luftaufbereitungseinrichtung 1' mit erster und zweiter Luftaufbereitungskomponente 3.1; 3.2' dargestellt.

Im Vergleich zu dem ersten Ausführungsbeispiel gemäß Fig. 1 unterscheidet sich das zweite Ausführungsbeipiel nach Fig. 2 insbesondere darin, dass das zweite Einlassventil 9.2' als ein 3/2-Wegeventil ausgebildet ist.

Somit sind das erste und zweite Einlassventil 9.1 ; 9.2' gemäß Fig. 2 identisch zueinander vorgesehen.

In diesem Sinne fällt das in Fig. 1 dargestellte Entlüftungsventil 9.3 der zweiten Luftaufbereitungskomponente 3.2 weg.

Hingegen weist nach Fig. 2 auch die zweite Luftaufbereitungskomponente 3.2' ein zweites Ableitungsventil 9.5, identisch zu dem ersten Ableitungsventil 9.4, auf.

Somit weisen die erste und zweite Luftaufbereitungskomponente 3.1 ;3.2' gemäß Fig. 2 im Wesentlichen identische Verschaltungen mit einem ersten bzw. zweiten Einlassventil 9.1; 9.2' sowie einem ersten bzw. zweiten Ableitungsventil 9.4; 9.5 auf.

Alternativ kann das erste Einlassventil 9.1 der ersten Luftaufbereitungskomponente 3.1 selbstverständlich auch als zwei 2/2-Wegeventile gemäß der Kombination aus zweitem Einlassventil 9.2 und Entlüftungsventil 9.3 der zweiten Luftaufbereitungskomponente 3.2 nach Fig. 1 ausgebildet sein.

### BEZUGSZEICHENLISTE

- 1: Luftaufbereitungseinrichtung
- 2.1: erster Druckluftanschluss
- 2.2: zweiter Druckluftanschluss
- 3.1: erste Lufaufbereitungskomponente
- 3.2: zweite Luftaufbereitungskomponente
- 3.2': zweite Luftaufbereitungskomponente
- 4.1: erste Lufttrocknerpatrone
- 4.1a: Eingang der ersten Lufttrocknerpatrone
- 4.1b: Ausgang der ersten Lufttrocknerpatrone
- 4.2: zweite Lufttrocknerpatrone
- 4.2a: Eingang der zweiten Lufttrocknerpatrone
- 4.2b: Ausgang der zweiten Lufttrocknerpatrone
- 5.1: erstes Hauptrückschlagventil
- 5.1a: Eingang des ersten Hauptrückschlagventils
- 5.1b: Ausgang des ersten Hauptrückschlagventils
- 5.2: zweites Hauptrückschlagventil
- 5.2a: Eingang des zweiten Hauptrückschlagventils
- 5.2b: Ausgang des zweiten Hauptrückschlagventils
- 6.1: erstes Regenerationsrückschlagventil
- 6.1a: Eingang des ersten Regenerationsrückschlagventils
- 6.1b: Ausgang des ersten Regenerationsrückschlagventils
- 6.2: zweites Regenerationsrückschlagventil
- 6.2a: Eingang des zweiten Regenerationsrückschlagventils
- 6.2b: Ausgang des zweiten Regenerationsrückschlagventils
- 7.1: erste Regenerationsdrossel
- 7.2: zweite Regenerationsdrossel
- 8.1: erster Regenerationsausgang
- 8.2: zweiter Regenerationsausgang
- 9.1: erstes Einlassventil
- 9.1a: Eingang des ersten Einlassventils
- 9.1b: Ausgang des ersten Einlassventils
- 9.1c: Steuereingang des ersten Einlassventils
- 9.1d: Entlüftungsausgang des ersten Einlassventils
- 9.2: zweites Einlassventil
- 9.2a: Eingang des zweiten Einlassventils
- 9.2b: Ausgang des zweiten Einlassventils
- 9.2c: Steuereingang des zweiten Entlüftungsventils
- 9.2': zweites Einlassventil
- 9.2'a: Eingang des zweiten Einlassventils
- 9.2'b: Ausgang des zweiten Einlassventils
- 9.2'c: Steuereingang des zweiten Entlüftungsventils
- 9.2'd: Entlüftungsausgang des zweiten Einlassventils
- 9.3: Entlüftungsventil
- 9.3a: Eingang des Entlüftungsventils
- 9.3b: Ausgang des Entlüftungsventils
- 9.3c: Steuereingang des Entlüftungsventils
- 9.4: erstes Ableitungsventil
- 9.4a: Eingang des ersten Ableitungsventils
- 9.4b: Ausgang des ersten Ableitungsventils
- 9.5: zweites Ableitungsventil
- 10.1: erster Pneumatikkreislaufausgang
- 10.2: zweiter Pneumatikkreislaufausgang
- 11: Steuerleitung
- MV1: erstes Magnetventil
- MV1a: Eingang des ersten Magnetventils
- MV1b: Ausgang des ersten Magnetventils
- MV2: zweites Magnetventil
- MV2a: Eingang des zweiten Magnetventils
- MV2b: Ausgang des zweiten Magnetventils
- MV3: drittes Magnetventil
- MV3a: Eingang des dritten Magnetventils
- MV3b: Ausgang des dritten Magnetventils
- 13: Schnellentlüftungsventil
- 14: Steuereinheit

## Patentansprüche

1. Luftaufbereitungseinrichtung (1; 1') für Kraftfahrzeuge mit wenigstens einem ersten Druckluftanschluss (2.1) und einem zweiten Druckluftanschluss (2.2) sowie einer ersten Luftaufbereitungskomponente (3.1) und einer zweiten Luftaufbereitungskomponente (3.2; 3.2'),
wobei die erste Luftaufbereitungskomponente (3.1) wenigstens ein erstes Magnetventil (MV1), ein zweites Magnetventil (MV2) und ein drittes Magnetventil (MV3), eine erste Lufttrocknerpatrone (4.1), ein erstes Hauptrückschlagventil (5.1), ein erstes Regenerationsrückschlagventil (6.1), eine erste Regenerationsdrossel (7.1) und ein erstes Einlassventil (9.1) aufweist,
wobei die zweite Luftaufbereitungskomponente (3.2; 3.2') wenigstens eine zweite Lufttrocknerpatrone (4.2), ein zweites Hauptrückschlagventil (5.2), ein zweites Regenerationsrückschlagventil (6.2), eine zweite Regenerationsdrossel (7.2) und ein zweites Einlassventil (9.2; 9.2') aufweist,
wobei das erste Magnetventil (MV1) und das zweite Magnetventil (MV2) zur Steuerung der ersten Luftaufbereitungskomponente (3.1) vorgesehen sind,
wobei eine Steuerleitung (11) derart vorgesehen ist, dass die zweite Luftaufbereitungskomponente (3.2; 3.2') mit dem dritten Magnetventil (MV3) der ersten Luftaufbereitungskomponente (3.1) verbunden ist,
**dadurch gekennzeichnet, dass**
das zweite Magnetventil (MV2) derart angeordnet ist, dass ein Eingang (MV2a) des zweiten Magnetventils (MV2) mit einem zweiten Pneumatikkreislaufausgang (10.2) und der Ausgang (MV2b) des zweiten Magnetventils (MV2) mit dem ersten Regenerationsrückschlagventil (6.1) sowie einem Steuereingang (9.1c) des ersten Einlassventils (9.1) verbunden ist.

2. Luftaufbereitungseinrichtung (1; 1') nach Anspruch 1,
**dadurch gekennzeichnet, dass**
ein Ausgang (MV3b) des dritten Magnetventils (MV3) anhand der Steuerleitung (11) mit einem Eingang (6.2a) des zweiten Regenerationsrückschlagventil (6.2) und einem Steuereingang (9.2c) des zweiten Einlassventils (9.2; 9.2') derart verbunden ist, dass die zweite Luftaufbereitungskomponente (3.2; 3.2') mittels dem dritten Magnetventil (MV3) steuerbar ist.

3. Luftaufbereitungseinrichtung (1; 1') nach Anspruch 1 oder 2,
**dadurch gekennzeichnet, dass**
ein Eingang (5.1a) des ersten Hauptrückschlagventils (5.1) mit einem Ausgang (4.1b) der ersten Lufttrocknerpatrone (4.1) und ein Eingang (5.2a) des zweiten Hautprückschlagventils (5.2) mit einem Ausgang (4.2b) der zweiten Lufttrocknerpatrone (4.2) verbunden ist, wobei ein Ausgang (4.1b) des ersten Hauptrückschlagventils (4.1) und ein Ausgang (4.2b) des zweiten Hauptrückschlagventils (4.2) jeweils mit einem ersten Pneumatikkreislaufausgang (10.1) verbunden ist.

4. Luftaufbereitungseinrichtung (1; 1') nach einem der vorhergehenden Ansprüche,
**dadurch gekennzeichnet, dass**
das erste und/oder zweite Einlassventil (9.1; 9.2') als ein 3/2-Wegeventil vorgesehen ist, wobei ein Entlüftungsausgang (9.1d; 9.2'd) des ersten und/oder zweiten Einlassventils (9.1; 9.2') mit einem ersten bzw. zweiten Regenerationsausgang (8.1; 8.2) verbunden ist.

5. Luftaufbereitungseinrichtung (1; 1') nach einem der vorhergehenden Ansprüche,
**dadurch gekennzeichnet, dass**
ein Schnellentlüftungsventil (13) derart vorgesehen ist, das ein Eingang (MV1a) des ersten Magnetventils (MV1) mit dem zweiten Pneumatikkreislaufausgang (10.2) und ein Ausgang (MV1b) des ersten Magnetventils (MV1) mit dem Schnellentlüftungsventil (13) verbunden ist.

6. Luftaufbereitungseinrichtung (1; 1') nach einem der vorhergehenden Ansprüche,
**dadurch gekennzeichnet, dass**
die erste Regenerationsdrossel (7.1) in das zweite Magnetventil (MV2) integriert ist und/oder dass die zweite Regenerationsdrossel (7.2) in das dritte Magnetventil (MV3) integriert ist.

## Claims

1. An air preparation device (1; 1 ') for motor vehicles, having at least one first compressed air port (2.1) and a second compressed air port (2.2) and a first air preparation component (3.1) and a second air preparation component (3.2; 3.2'),
the first air preparation component (3.1) having at least one first solenoid valve (MV1), a second solenoid valve (MV2) and a third solenoid valve (MV3), a first air drier cartridge (4.1), a first main non-return valve (5.1), a first regeneration non-return valve (6.1), a first regeneration throttle (7.1) and a first inlet valve (9.1),
the second air preparation component (3.2; 3.2') having at least one second air drier cartridge (4.2), a second main non-return valve (5.2), a second regeneration non-return valve (6.2), a second regeneration throttle (7.2) and a second inlet valve (9.2; 9.2'),
the first solenoid valve (MV1) and the second solenoid valve (MV2) being provided to control the first air preparation component (3.1),
a control line (11) being provided in such a manner that the second air preparation component (3.2; 3.2') is connected to the third solenoid valve (MV3) of the first air preparation component (3.1),
**characterised in that**
the second solenoid valve (MV2) is arranged in such a manner that an input (MV2a) of the second solenoid valve (MV2) is connected to a second pneumatic circuit output (10.2), and the output (MV2b) of the second solenoid valve (MV2) is connected to the first regeneration non-return valve (6.1) and to a control input (9.1c) of the first inlet valve (9.1).

2. An air preparation device (1; 1') according to claim 1,
**characterised in that**
an output (MV3b) of the third solenoid valve (MV3) is connected by means of the control line (11) to an input (6.2a) of the second regeneration non-return valve (6.2) and to a control input (9.2c) of the second inlet valve (9.2; 9.2') in such a manner that the second air preparation component (3.2; 3.2') can be controlled by means of the third solenoid valve (MV3).

3. An air preparation device (1; 1') according to claim 1 or 2,
**characterised in that**
an input (5.1a) of the first main non-return valve (5.1) is connected to an output (4.1b) of the first air drier cartridge (4.1), and an input (5.2a) of the second main non-return valve (5.2) is connected to an output (4.2b) of the second air drier cartridge (4.2), an output (4.1b) of the first main non-return valve (4.1) and an output (4.2b) of the second main non-return valve (4.2) are each connected to a first pneumatic circuit output (10.1).

4. An air preparation device (1; 1') according to any one of the preceding claims,
**characterised in that**
the first and/or second inlet valve (9.1; 9.2') is provided as a 3/2-way control valve, a venting output (9.1d; 9.2'd) of the first and/or second inlet valve (9.1; 9.2') being connected to a first or a second regeneration output (8.1; 8.2).

5. An air preparation device (1; 1') according to any one of the preceding claims, **characterised in that**
a quick venting valve (13) is provided in such a manner that an input (MV1a) of the first solenoid valve (MV1) is connected to the second pneumatic circuit output (10.2), and an output (MV1b) of the first solenoid valve (MV1) is connected to the quick venting valve (13).

6. An air preparation device (1; 1 ') according to any one of the preceding claims, **characterised in that**
the first regeneration throttle (7.1) is integrated in the second solenoid valve (MV2), and/or **in that** the second regeneration throttle (7.2) is integrated in the third solenoid valve (MV3).

## Revendications

1. Dispositif (1; 1') de traitement de l'air pour des véhicules automobiles comprenant au moins un premier raccord (2.1) pour de l'air comprimé et un deuxième raccord (2.2) pour de l'air comprimé, ainsi qu'un premier composant (3.1) de traitement de l'air et un deuxième composant (3.2 ; 3.2') de traitement de l'air, dans lequel le premier composant (3.1) de traitement de l'air a au moins une première électrovanne (MV1), une deuxième électrovanne (MV2) et une troisième électrovanne (MV3), une première cartouche (4.1) de déshydratant de l'air, un premier clapet (5.1) antiretour principal, un premier clapet (6.1) antiretour de régénération, un premier étranglement (7.1) de régénération et une première soupape (9.1) d'entrée,
dans lequel le deuxième composant (3.2 ; 3.2') de traitement de l'air a au moins une deuxième cartouche (4.2) de déshydratant de l'air, un deuxième clapet (5.2) antiretour principal, un deuxième clapet (6.2) antiretour de régénération, un deuxième étranglement (7.2) de régénération et une deuxième soupape (9.2 ; 9.2') d'entrée,
dans lequel la première électrovanne (MV1) et la deuxième électrovanne (MV2) sont prévues pour la commande du premier composant (3.1) de traitement de l'air,
dans lequel il est prévu une ligne (11) de commande, de manière à relier le deuxième composant (3.2 ; 3.2') de traitement de l'air à la troisième électrovanne (MV3) du premier composant (3.1) de traitement de l'air,
**caractérisé en ce que**
la deuxième électrovanne (MV2) est disposée de manière à ce qu'une entrée (MV2a) de la deuxième électrovanne (MV2) soit reliée à une deuxième sortie (10.2) de circuit pneumatique, et de manière à ce que la sortie (MV2b) de la deuxième électrovanne (MV2) soit reliée au premier clapet (6.1) antiretour de régénération, ainsi qu'à une entrée (9.1c) de commande de la première soupape (9.1) d'entrée.

2. Dispositif (1; 1') de traitement de l'air suivant la revendication 1,
**caractérisé en ce qu'**
une sortie (MV3b) de la troisième électrovanne (MV3) est reliée à l'aide de la ligne (11) de commande à une entrée (6.2a) du deuxième clapet (6.2) antiretour de régénération et à une entrée (9.2c) de commande de la deuxième soupape (9.2 ; 9.2') d'entrée, de manière à pouvoir commander le deuxième composant (3.2 ; 3.2') de traitement de l'air au moyen de la troisième électrovanne (MV3).

3. Dispositif (1; 1') de traitement de l'air suivant la revendication 1 ou 2,
**caractérisé en ce qu'**
une entrée (5.1a) du premier clapet (5.1) antiretour principal est reliée à une sortie (4.1b) de la première cartouche (4.1) de déshydratant de l'air et une entrée (5.2a) du deuxième clapet (5.2) antiretour principal est reliée à une sortie (4.2b) de la deuxième cartouche (4.2) de déshydratant de l'air, dans lequel une sortie (4.1b) du premier clapet (4.1) antiretour principal et une sortie (4.2b) du deuxième clapet (4.2) antiretour principal sont reliées respectivement à une première sortie (10.1) de circuit pneumatique.

4. Dispositif (1 ; 1') de traitement de l'air suivant l'une des revendications précédentes,
**caractérisé en ce que**
la première et/ou la deuxième soupape (9.1 ; 9.2') d'entrée est prévue sous la forme d'une soupape à 3/2 voies, dans lequel une sortie (9.1d ; 9.2'd) de purge de la première et/ou de la deuxième soupape (9.1 ; 9.2') d'entrée est reliée à une première ou à une deuxième sortie (8.1 ; 8.2) de régénération.

5. Dispositif (1 ; 1') de traitement de l'air suivant l'une des revendications précédentes,
**caractérisé en ce qu'**
il est prévu une soupape (13) de purge rapide, de manière à ce qu'une entrée (MV1a) de la première électrovanne (MV1) soit reliée à la deuxième sortie (10.2) de circuit pneumatique et de manière à ce qu'une sortie (MV1b) de la première électrovanne (MV1) soit reliée à la soupape (13) de purge rapide.

6. Dispositif (1 ; 1') de traitement de l'air suivant l'une des revendications précédentes,
**caractérisé en ce que**
le premier étranglement (7.1) de régénération est intégrée dans la deuxième électrovanne (MV2) et/ou **en ce que** le deuxième étranglement (7.2) de régénération est intégré dans la troisième électrovanne (MV3).
